# EUROPÄISCHE PATENTANMELDUNG

(11) **EP 4 057 092 A1**
(43) Veröffentlichungstag der Anmeldung: **14.09.2022**
(21) Anmeldenummer: 21161659.4
(22) Anmeldetag: 10.03.2021
(51) Int. Cl.: G05B 23/02, G06K 9/00

(54) **VERFAHREN UND MOBILGERÄT ZUR VERARBEITUNG VON LICHTSIGNALEN EINES GERÄTS**

(71) Anmelder: Siemens Aktiengesellschaft, 80333 München (DE)
(72) Erfinder: Kessner, Martin, 80336 München (DE); Mathé, Linda, 82216 Maisach (DE); Wolf, Silvio, 85540 Haar (DE)

(57) **Zusammenfassung**

Eine Kamera (K) erfasst Lichtsignale (LS), welche ein Gerät (SG) aussendet. Eine Recheneinheit (RE) erkennt ein erstes Signalisierungsmuster (SM1) anhand der erfassten Lichtsignale. Die Recheneinheit greift über eine Schnittstelle (S) auf einen ersten Speicher (SP) zu, in welchem eine Datenbank (DB) gespeichert ist, welche Signalisierungsmuster Zustandsinformationen zuordnet. Die Recheneinheit entnimmt eine dem ersten Signalisierungsmuster zugehörige erste Zustandsinformation (Z1) aus der Datenbank. Eine Anzeige (AZ) gibt eine erste Zustandsrepräsentation (ZR1) aus. Die erste Zustandsrepräsentation ist mit der ersten Zustandsinformation identisch oder wird von der Recheneinheit in Abhängigkeit von der ersten Zustandsinformation berechnet oder aus dem ersten Speicher oder einem zweiten Speicher abgerufen. Das Verfahren und das Mobilgerät erlauben einem Bediener, einen Zustand, insbesondere selten auftretende Zustände wie Fehlerzustände, des Gerätes in Sekundenschnelle zu interpretieren und geeignete Gegenmaßnahmen zu treffen.

## Beschreibung

Die Erfindung betrifft die Verarbeitung von Lichtsignalen, welche beispielsweise durch LEDs eines Geräts erzeugt werden und einen Status des Geräts anzeigen.

Geräte ohne grafische oder textuelle Anzeige, beispielsweise die Steuerung SIMATIC S7-300, zeigen einem Bediener einen aktuellen Operations-Zustand durch eine oder mehrere Status-LEDs an. Da die Anzahl der LEDs oft kleiner ist als die Menge der anzuzeigenden Zustände, werden Zustände häufig in kodierter Form ausgegeben, z.B. durch unterschiedliche Kombinationen aktiver und inaktiver LEDs oder durch Blinken in verschiedenen Frequenzen und/oder Farben.

Um den Status des Gerätes korrekt zu interpretieren, muss der Bediener die kodierten Zustände folglich erlernen oder in einem Benutzerhandbuch nachschlagen.

Die Aufgabe der Erfindung besteht darin, eine Alternative zum Stand der Technik bereitzustellen.

Die Aufgabe der Erfindung wird durch die unabhängigen Patentansprüche gelöst.

Bei dem Verfahren zur Verarbeitung von Lichtsignalen eines Geräts erfasst mindestens ein optischer Sensor, insbesondere eine Kamera, Lichtsignale, welche ein Gerät aussendet. Eine Recheneinheit erkennt ein erstes Signalisierungsmuster anhand der erfassten Lichtsignale. Die Recheneinheit greift über eine Schnittstelle auf einen ersten Speicher zu, in welchem eine Datenbank gespeichert ist, welche Signalisierungsmuster Zustandsinformationen zuordnet. Die Recheneinheit entnimmt eine dem ersten Signalisierungsmuster zugehörige erste Zustandsinformation aus der Datenbank. Eine Anzeige gibt eine erste Zustandsrepräsentation aus. Die erste Zustandsrepräsentation ist mit der ersten Zustandsinformation identisch oder wird von der Recheneinheit in Abhängigkeit von der ersten Zustandsinformation berechnet oder aus dem ersten Speicher oder einem zweiten Speicher abgerufen.

Das Mobilgerät zur Verarbeitung von Lichtsignalen eines Geräts enthält:
- mindestens einen optischen Sensor, insbesondere eine Kamera, eingerichtet zur Erfassung von Lichtsignalen, welche ein Gerät aussendet,
- eine Anzeige,
- eine Schnittstelle, eingerichtet für einen Zugriff auf einen ersten Speicher, in welchem eine Datenbank gespeichert ist, welche Signalisierungsmuster Zustandsinformationen zuordnet,
- eine Recheneinheit, eingerichtet
   - zur Erkennung eines ersten Signalisierungsmusters anhand der erfassten Lichtsignale,
   - zur Entnahme einer dem ersten Signalisierungsmuster zugehörigen ersten Zustandsinformation aus der Datenbank, und
   - zur Ausgabe einer ersten Zustandsrepräsentation mittels der Anzeige.

Die erste Zustandsrepräsentation ist mit der ersten Zustandsinformation identisch, oder die Recheneinheit ist eingerichtet, die erste Zustandsrepräsentation in Abhängigkeit von der ersten Zustandsinformation zu berechnen oder aus dem ersten Speicher oder einem zweiten Speicher abzurufen.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Das Verfahren und das Mobilgerät erlauben einem Bediener, einen Zustand, insbesondere selten auftretende Zustände wie Fehlerzustände, des Gerätes in Sekundenschnelle zu interpretieren und geeignete Gegenmaßnahmen zu treffen.

Gemäß einer Ausführungsform sind die Kamera, die Schnittstelle, die Anzeige, die Recheneinheit und der erste Speicher in einem Mobilgerät eingebaut.

In einer Weiterbildung sind die Kamera und die Anzeige in einem Mobilgerät eingebaut. Der erste Speicher ist in einem ersten Server angeordnet, welcher sich insbesondere in einer Cloud befindet. Die Recheneinheit ist in dem Mobilgerät, dem ersten Server oder einem zweiten Server angeordnet.

Gemäß einer Ausführungsform ist die Anzeige eine optische oder akustische Anzeige, wobei die Anzeige insbesondere ein Bildschirm oder ein Lautsprecher ist.

In einer Weiterbildung werden die Lichtsignale von einer oder mehreren LEDs des Geräts erzeugt. Jedes der Lichtsignale ist ein statisches Leuchten oder ein Blinken, wobei sich die Lichtsignale insbesondere durch eine Frequenz des Blinkens und/oder ein zeitliches Muster des Blinkens und/oder eine Farbe unterscheiden.

Gemäß einer Ausführungsform enthält die erste Zustandsrepräsentation mindestens einen Text und/oder mindestens eine Grafik und/oder mindestens eine Sprachausgabe. Die erste Zustandsrepräsentation enthält insbesondere Hinweise für eine Fehlerbehebung.

Auf dem computerlesbaren Datenträger ist ein Computerprogramm gespeichert, welches das Verfahren ausführt, wenn es in einem Prozessor abgearbeitet wird.

Das Computerprogramm wird in einem Prozessor abgearbeitet und führt dabei das Verfahren aus.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: ein Ausführungsbeispiel eines Mobilgeräts MG zur Verarbeitung von Lichtsignalen LS eines Geräts SG, und
- Figur 2: ein Mobilgerät MG, welches mit einem Server SV kommuniziert.

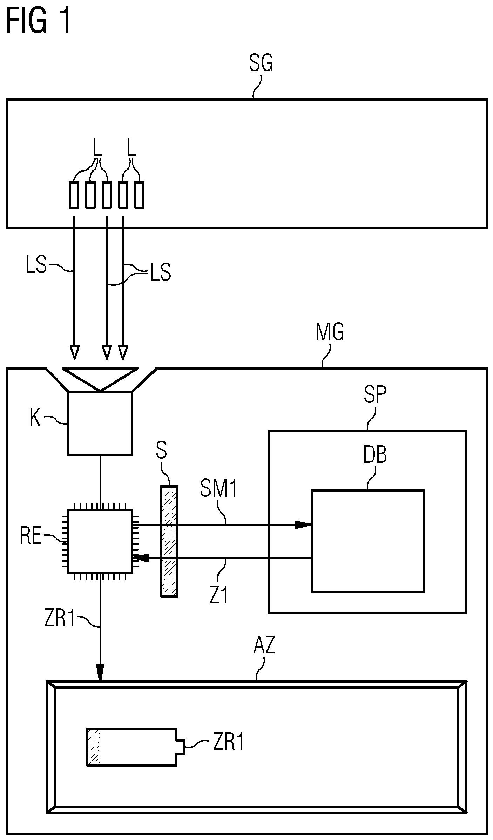

Figur 1 zeigt ein Mobilgerät MG mit einer Kamera K, welche Lichtsignale LS erfasst, welche LEDs L eines Geräts SG aussenden. Das Mobilgerät MG ist beispielsweise ein Smartphone oder ein Tabletcomputer. Das Gerät SG ist beispielsweise eine Automatisierungskomponente (etwa ein Umrichter, ein Antrieb oder eine Steuerung) oder ein WLAN-Router.

Anstelle der Kamera K können auch ein oder mehrere optische Sensoren anderer Art eingesetzt werden, beispielsweise eine Anzahl von Fotodioden, welche passgenau zu den LEDs L des Geräts SG im Mobilgerät MG angeordnet sind.

Eine Recheneinheit RE, beispielsweise ein Prozessor (etwa ein Mikroprozessor oder Mikrocontroller, ein System-on-Chip, ein programmierbarer Digitalbaustein FPGA oder ein neuromorpher Prozessor) erkennt ein erstes Signalisierungsmuster SM1 anhand der erfassten Lichtsignale LS. Beispielsweise leuchtet eine erste LED L statisch, während eine dritte LED L langsam und eine vierte LED L schnell blinkt. Das erste Signalisierungsmuster SM1 lautet dann beispielsweise:
LED_1=(an,rot)
LED_2=(aus)
LED_3=(blinkt(f=1.0Hz),gelb)
LED_4=(blinkt(f=2.0Hz),grün)
LED_5=(aus)

Die Recheneinheit RE kann zur Erkennung des ersten Signalisierungsmusters SM1 Bilderkennungsalgorithmen und Vorwissen über das Gerät SG verwenden. Beispielsweise führt die Recheneinheit RE eine App aus, welche auf SIMATIC Steuerungen spezialisiert ist. Zur Bilderkennung enthält die App Vorwissen, welche Typen der SIMATIC Steuerung existieren. Der vorliegende Typ wird manuell in der App ausgewählt oder automatisch aus dem Kamerabild oder einer drahtlosen Verbindung zu dem Gerät SG erkannt. Weiterhin enthält die App Vorwissen, wie viele LEDs L das Gerät SG enthält und wie diese angeordnet sind. Im Rahmen einer Mustererkennung können die Lichtsignale LS nun aus dem Kamerabild fortlaufend extrahiert werden.

Alternativ oder ergänzend kann ein Algorithmus zum maschinellen Lernen, beispielsweise ein neuronales Netz, trainiert werden, um das jeweilige Signalisierungsmuster anhand des Kamerabilds zu erkennen.

Die Recheneinheit RE greift über eine Schnittstelle S, hier ein Bus des Mobilgeräts MG, auf einen ersten Speicher SP zu, beispielsweise ein Arbeitsspeicher oder eine SSD in dem Mobilgerät MG, in welchem eine Datenbank DB gespeichert ist, welche Signalisierungsmuster SM Zustandsinformationen Z zuordnet. Die Datenbank DB kann auch Bestandteil der zuvor genannten App sein und als einfache Datenstruktur implementiert werden.

Die Recheneinheit RE entnimmt eine dem ersten Signalisierungsmuster SM1 zugehörige erste Zustandsinformation Z1 aus der Datenbank DB. Die erste Zustandsinformation Z1 ist beispielsweise "battery_low".

Eine Anzeige AZ gibt eine erste Zustandsrepräsentation ZR1 aus. Die erste Zustandsrepräsentation ZR1 kann mit der ersten Zustandsinformation Z1 identisch sein. In diesem Fall wird beispielsweise der Text "battery_low" auf der Anzeige AZ ausgegeben. Falls die erste Zustandsinformation Z1 einen Prozentwert für den Ladezustand bereitstellt, kann eine Grafik als erste Zustandsrepräsentation ZR1 berechnet und ausgegeben werden, welche den Ladezustand visualisiert. Alternativ kann eine vorgegebene Grafik als erste Zustandsrepräsentation ZR1 aus dem ersten Speicher SP oder einem zweiten Speicher abgerufen werden, welche den niedrigen Ladezustand visualisiert.

Die erste Zustandsrepräsentation ZR1 kann weitere zur ersten Zustandsinformation Z1 passende Informationen durch Text, Grafiken oder Sprachausgabe visualisieren, beispielsweise Abhilfemaßnahmen zur Fehlerbeseitigung.

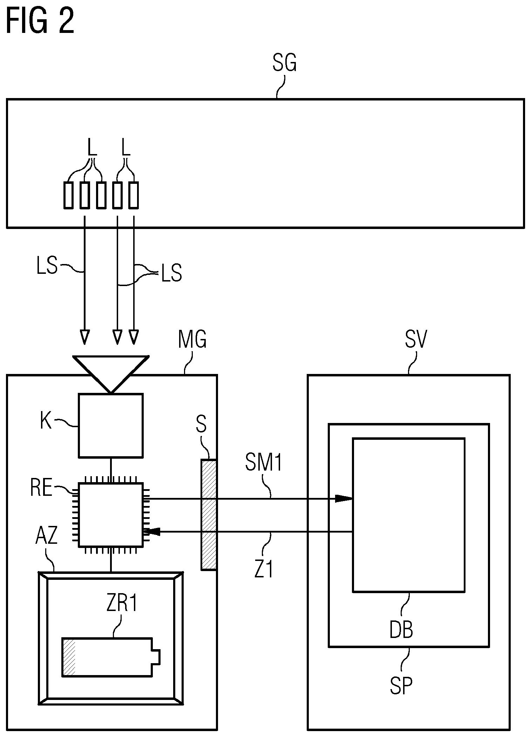

Figur 2 zeigt ein Mobilgerät MG, welches mit einem Server SV kommuniziert, welcher sich beispielsweise in einer Cloud befindet. Die Kamera K und die Anzeige AZ sind wie in Figur 1 im Mobilgerät MG eingebaut. Die Recheneinheit RE greift über eine Schnittstelle S, beispielsweise eine 4G oder 5G Mobilfunkverbindung, auf den Server SV zu, welcher den ersten Speicher SP mit der Datenbank DB bereitstellt.

Abweichend von Figur 2 kann die Mustererkennung aus dem Kamerabild auch auf dem Server SV durchgeführt werden. In diesem Fall befindet sich die Recheneinheit RE im Server SV und verarbeitet das Kamerabild auf dem Server.

Die Anzeige AZ kann eine optische oder akustische Anzeige sein, wobei die Anzeige insbesondere ein Bildschirm oder ein Lautsprecher ist. In letzterem Fall wird die erste Zustandsrepräsentation ZR1 durch Sprachausgabe ausgegeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Verarbeitung von Lichtsignalen eines Geräts, bei dem
- mindestens ein optischer Sensor, insbesondere eine Kamera (K), Lichtsignale (LS) erfasst, welche ein Gerät (SG) aussendet,
- eine Recheneinheit (RE) ein erstes Signalisierungsmuster (SM1) anhand der erfassten Lichtsignale (LS) erkennt,
- die Recheneinheit (RE) über eine Schnittstelle (S) auf einen ersten Speicher (SP) zugreift, in welchem eine Datenbank (DB) gespeichert ist, welche Signalisierungsmuster Zustandsinformationen zuordnet,
- die Recheneinheit (RE) eine dem ersten Signalisierungsmuster (SM1) zugehörige erste Zustandsinformation (Z1) aus der Datenbank (DB) entnimmt, und
- eine Anzeige (AZ) eine erste Zustandsrepräsentation (ZR1) ausgibt,
- wobei die erste Zustandsrepräsentation (ZR1) mit der ersten Zustandsinformation (Z1) identisch ist oder von der Recheneinheit in Abhängigkeit von der ersten Zustandsinformation (Z1) berechnet oder aus dem ersten Speicher (SP) oder einem zweiten Speicher abgerufen wird.

2. Verfahren nach Anspruch 1,
- bei dem der optische Sensor, die Schnittstelle (S), die Anzeige (AZ), die Recheneinheit (RE) und der erste Speicher (SP) in einem Mobilgerät (MG) eingebaut sind.

3. Verfahren nach Anspruch 1,
- bei dem der optische Sensor und die Anzeige (AZ) in einem Mobilgerät (MG) eingebaut sind,
- bei dem der erste Speicher (SP) in einem ersten Server (SV), welcher sich insbesondere in einer Cloud befindet, angeordnet ist, und
- bei dem die Recheneinheit (RE) in dem Mobilgerät (MG), dem ersten Server (SV) oder einem zweiten Server angeordnet ist.

4. Verfahren nach einem der vorhergehenden Ansprüche,
- bei dem die Anzeige (AZ) eine optische oder akustische Anzeige ist, wobei die Anzeige insbesondere ein Bildschirm oder ein Lautsprecher ist.

5. Verfahren nach einem der vorhergehenden Ansprüche,
- bei dem die Lichtsignale (LS) von einer oder mehreren LEDs (L) des Geräts (SG) erzeugt werden, und
- bei dem jedes der Lichtsignale ein statisches Leuchten oder ein Blinken ist, wobei sich die Lichtsignale (LS) insbesondere durch eine Frequenz des Blinkens und/oder ein zeitliches Muster des Blinkens und/oder eine Farbe unterscheiden.

6. Verfahren nach einem der vorhergehenden Ansprüche,
- bei dem die erste Zustandsrepräsentation (ZR1) mindestens einen Text und/oder mindestens eine Grafik und/oder mindestens eine Sprachausgabe enthält, und
- bei dem die erste Zustandsrepräsentation (ZR1) insbesondere Hinweise für eine Fehlerbehebung enthält.

7. Computerlesbarer Datenträger,
- auf dem ein Computerprogramm gespeichert ist, welches das Verfahren nach einem der Ansprüche 1 bis 6 ausführt, wenn es in einem Prozessor abgearbeitet wird.

8. Computerprogramm,
- welches in einem Prozessor abgearbeitet wird und dabei das Verfahren nach einem der Ansprüche 1 bis 6 ausführt.

9. Mobilgerät zur Verarbeitung von Lichtsignalen eines Geräts,
- mit mindestens einem optischen Sensor, insbesondere einer Kamera (K), eingerichtet zur Erfassung von Lichtsignalen (LS), welche ein Gerät (SG) aussendet,
- mit einer Anzeige (AZ),
- mit einer Schnittstelle (S), eingerichtet für einen Zugriff auf einen ersten Speicher (SP), in welchem eine Datenbank (DB) gespeichert ist, welche Signalisierungsmuster Zustandsinformationen zuordnet,
- mit einer Recheneinheit (RE), eingerichtet
- zur Erkennung eines ersten Signalisierungsmusters (SM1) anhand der erfassten Lichtsignale (LS),
- zur Entnahme einer dem ersten Signalisierungsmuster (SM1) zugehörigen ersten Zustandsinformation (Z1) aus der Datenbank (DB), und
- zur Ausgabe einer ersten Zustandsrepräsentation (ZR1) mittels der Anzeige (AZ),
- wobei die erste Zustandsrepräsentation (ZR1) mit der ersten Zustandsinformation (Z1) identisch ist, oder wobei die Recheneinheit (RE) eingerichtet ist, die erste Zustandsrepräsentation (ZR1) in Abhängigkeit von der ersten Zustandsinformation (Z1) zu berechnen oder aus dem ersten Speicher (SP) oder einem zweiten Speicher abzurufen.
